# EUROPÄISCHE PATENTSCHRIFT

(11) **EP 3 273 070 B1**
(45) Veröffentlichungstag und Bekanntmachung des Hinweises auf die Patenterteilung: **01.04.2020**
(21) Anmeldenummer: 17168826.0
(22) Anmeldetag: 28.04.2017
(51) Int. Cl.: F15B 15/26, F16B 7/14, B29C 45/67

(54) **VORRICHTUNG ZUM HALTEN EINES STANGENFÖRMIGEN KÖRPERS MIT DREHMOMENTABSTÜTZUNG UND ENTSPRECHENDE NACHRÜST-BAUGRUPPE**
DEVICE FOR HOLDING A ROD -SHAPED BODY WITH TORQUE SUPPORT AND CORRESPONDING RETROFIT ASSEMBLY
DISPOSITIF DE RETENUE D'UN CORPS EN FORME DE TIGE AVEC SUPPORT DE COUPLE ET MODULE RÉTROACTIF CORRESPONDANT

(30) Priorität: 28.06.2016 DE 102016111833
(43) Veröffentlichungstag der Anmeldung: 24.01.2018
(73) Patentinhaber: SITEMA GmbH & Co. KG, 76187 Karlsruhe (DE)
(72) Erfinder: Back, Gunnar, 76532 Baden-Baden (DE)
(74) Vertreter: Lemcke, Brommer & Partner Patentanwälte Partnerschaft mbB

(56) Entgegenhaltungen:
- EP-A2- 1 813 823
- EP-A2- 2 226 513
- WO-A2-00/74892
- DE-A1- 2 031 796
- DE-A1- 3 510 643
- DE-A1-102012 020 765
- DE-U1- 8 804 418
- FR-A1- 2 411 694

## Beschreibung

Die Erfindung betrifft eine Vorrichtung nach Anspruch 1 zum Halten eines stangenförmigen Körpers sowie eine entsprechende Nachrüst-Baugruppe gemäß Anspruch 12.

Bekannte Vorrichtungen der genannten Art weisen regelmäßig ein inneres Klemmelement mit Außenkonus auf, welches den stangenförmigen Körper in einem Abschnitt umgibt. Sie besitzen weiterhin ein äußeres Klemmelement mit Innenkonus, welches das innere Klemmelement zumindest abschnittweise umgibt, dessen Innenkonus komplementär zu dem Außenkonus des inneren Klemmelements ausgebildet ist. Weiterhin umfassen die genannten Vorrichtungen eine Klemmkrafteinrichtung zum relativen Verschieben von innerem Klemmelement und äußerem Klemmelement in einer ersten Richtung parallel zu einer Längserstreckung des stangenförmigen Körpers, um das innere Klemmelement im Bereich des Außenkonus und das äußeres Klemmelement im Bereich des Innenkonus zum Halten des stangenförmigen Körpers in eine Anlagestellung zu bringen. In dieser Anlagestellung wirken das äußere Klemmelement, das innere Klemmelement und der stangenförmige Körper kraftschlüssig bzw. reibschlüssig zusammen, um den stangenförmigen Körper in der Anlagestellung zu halten.

Weiterhin umfasst eine bekannte Vorrichtung eine Lösekrafteinrichtung zum relativen Verschieben von innerem Klemmelement und äußerem Klemmelement in einer zweiten, der ersten Richtung entgegengesetzten Richtung parallel zu einer Längserstreckung des stangenförmigen Körpers, um das innere Klemmelement im Bereich des Außenkonus und das äußere Klemmelement im Bereich des Innenkonus zum Lösen des stangenförmigen Körpers voneinander zu beabstanden. Die vorbezeichneten Elemente sind in einem Gehäuse aufgenommen, in welches Gehäuse der stangenförmige Körper hineingeführt oder durch welches Gehäuse der stangenförmige Körper hindurchgeführt ist.

Derartige Halte- oder Klemmvorrichtungen finden auf unterschiedlichsten Gebieten der Technik Verwendung, beispielsweise zum Halten der Position einer Achse, zum Sichern von Pressen oder dergleichen.

Vorrichtungen der eingangs beschriebenen Art sind dazu ausgebildet und geeignet, Kräften zu widerstehen, die im Wesentlichen in Richtung einer Längsachse bzw. der Längserstreckung des stangenförmigen Körpers wirken.

Aus der DE 10 2012 020 765 A1 ist in Weiterbildung einer Vorrichtung der genannten Art bekannt, diese zum Abbremsen von rotierenden Bewegungen auszugestalten. Dazu wird eine als inneres Klemmelement dienende Spannzange mit einem Einstellring verschraubt, welcher Einstellring seinerseits über ein Gewinde fest mit einem Gehäuse der Vorrichtung verbunden ist.

Hiervon ausgehend liegt der Erfindung die Aufgabe zugrunde, eine Vorrichtung der eingangs genannten Art dahingehend weiterzubilden, dass die Vorrichtung auch gegenüber Kräften wirksam ist, die abweichend von der genannten Längsrichtung des stangenförmigen Körpers angreifen, somit also ein Drehmoment bewirken. Anders formuliert soll eine Vorrichtung ertüchtigt werden, an dem stangenförmigen Körper angreifenden Drehmomenten bzw. Torsionsbelastungen wirksam entgegenzuwirken.

Außerdem liegt der Erfindung die Aufgabe zugrunde, eine Nachrüst-Baugruppe für eine Vorrichtung anzugeben, mit der eine bereits existierende Vorrichtung nachträglich im erfindungsgemäßen Sinne ertüchtigt werden kann.

Diese Aufgabe wird erfindungsgemäß gelöst durch eine Vorrichtung mit den Merkmalen des Anspruchs 1 sowie durch eine Nachrüst-Baugruppe mit den Merkmalen des Anspruchs 12. Bevorzugte Weiterbildungen der erfindungsbegründenden Idee sind jeweils Gegenstand von Unteransprüchen.

Eine erfindungsgemäße Vorrichtung zum Halten eines stangenförmigen Körpers, aufweisend: ein inneres Klemmelement mit Außenkonus, welches den stangenförmigen Körper in einem Abschnitt umgibt; ein äußeres Klemmelement mit Innenkonus, welches das innere Klemmelement zumindest abschnittweise umgibt, dessen Innenkonus komplementär zu dem Außenkonus des inneren Klemmelements ausgebildet ist; eine Klemmkrafteinrichtung zum relativen Verschieben von innerem Klemmelement und äußerem Klemmelement in einer ersten Richtung parallel zu einer Längserstreckung des stangenförmigen Körpers, um das innere Klemmelement im Bereich des Außenkonus und das äußere Klemmelement im Bereich des Innenkonus zum Halten des stangenförmigen Körpers in eine Anlagestellung zu bringen; eine Lösekrafteinrichtung zum relativen Verschieben von innerem Klemmelement und äußerem Klemmelement in einer zweiten, der ersten entgegengesetzten Richtung parallel zu einer Längserstreckung des stangenförmigen Körpers, um das innere Klemmelement im Bereich des Außenkonus und das äußere Klemmelement im Bereich des Innenkonus zum Lösen des stangenförmigen Körpers voneinander zu beabstanden; ein Gehäuse, welches die vorbezeichneten Elemente aufnimmt und in welches der stangenförmige Körper hineingeführt oder durch welches der stangenförmige Körper hindurchgeführt ist; in welchem Gehäuse benachbart zu dem inneren Klemmelement ein Gegenstück angeordnet ist, welches Gegenstück in der ersten Richtung hinter dem inneren Klemmelement angeordnet ist und eine dem inneren Klemmelement zugewandte Stirnseite aufweist; wobei das Gegenstück bezüglich des Gehäuses drehfest angeordnet ist und an oder im Bereich der Stirnseite wenigstens eine Formschlussstruktur aufweist; das innere Klemmelement wenigstens eine zu der Formschlussstruktur des Gegenstücks zumindest teilweise komplementäre Formschlussstruktur an oder im Bereich seiner dem Gegenstück zugewandten Stirnseite aufweist, sodass die Formschlussstruktur des Gegenstücks und die komplementäre Formschlussstruktur des inneren Klemmelements in der Anlagestellung miteinander unter Bildung eines Formschlusses in Eingriff stehen, wobei der Formschluss im Wesentlichen nur in tangentialer Richtung bezüglich der Stirnseiten oder in Umfangsrichtung, quer zu einer radialen Richtung, wirksam ist, nicht jedoch in radialer Richtung.

Eine erfindungsgemäße Nachrüstbaugruppe für eine Vorrichtung zum Halten eines stangenförmigen Körpers, welche Vorrichtung aufweist: ein inneres Klemmelement mit Außenkonus, welches dazu ausgebildet und vorgesehen ist, den stangenförmigen Körper in einem Abschnitt zu umgeben; ein äußeres Klemmelement mit Innenkonus, welches das innere Klemmelement zumindest abschnittweise umgibt, dessen Innenkonus komplementär zu dem Außenkonus des inneren Klemmelements ausgebildet ist; eine Klemmkrafteinrichtung zum relativen Verschieben von innerem Klemmelement und äußerem Klemmelement in einer ersten Richtung parallel zu einer Längsrichtung des stangenförmigen Körpers, um das innere Klemmelement im Bereich des Außenkonus und das äußere Klemmelement im Bereich des Innenkonus zum Halten des stangenförmigen Körpers in eine Anlagestellung zu bringen; eine Lösekrafteinrichtung zum relativen Verschieben von innerem Klemmelement und äußerem Klemmelement in einer zweiten, der ersten entgegengesetzten Richtung parallel zu einer Längsrichtung des stangenförmigen Körpers, um das innere Klemmelement im Bereich des Außenkonus und das äußere Klemmelement im Bereich des Innenkonus zum Lösen des stangenförmigen Körpers voneinander zu beabstanden; ein Gehäuse, welches die vorbezeichneten Elemente aufnimmt und durch welches der stangenförmigen Körper hindurchgeführt ist, zeichnet sich hinsichtlich der Nachrüst-Baugruppe aus durch: ein in dem Gehäuse an dem stangenförmigen Körper anzuordnendes Gegenstück, welches dazu ausgebildet und vorgesehen ist, in der ersten Richtung hinter dem inneren Klemmelement angeordnet zu sein und welches eine dem inneren Klemmelement zuzuwendende Stirnseite aufweist, welches Gegenstück bezüglich des Gehäuses drehfest anzuordnen ist und an oder im Bereich der Stirnseite wenigstens eine Formschlussstruktur aufweist; ein inneres Nachrüst-Klemmelement, das anstelle des inneren Klemmelements in die Vorrichtung einsetzbar ist und wenigstens eine zu der Formschlussstruktur des Gegenstücks zumindest teilweise komplementäre Formschlussstruktur an oder im Bereich seiner dem Gegenstück zugewandten Stirnseite aufweist, sodass die Formschlussstruktur des Gegenstücks und die komplementäre Formschlussstruktur des inneren Nachrüst-Klemmelements in der Anlagestellung miteinander unter Bildung eines Formschlusses in Eingriff bringbar ist, wobei der Formschluss im Wesentlichen nur in tangentialer Richtung bezüglich der Stirnseiten oder in Umfangsrichtung, quer zu einer radialen Richtung, wirksam ist, nicht jedoch in radialer Richtung.

Erfindungsgemäß ist demnach in dem Gehäuse der Vorrichtung zusätzlich zu den bekannten inneren und äußeren Klemmelementen ein Gegenstück vorgesehen, welches mit seiner Formschlussstruktur mit einer Formschlussstruktur des inneren Klemmelements formschlüssig zusammenwirkt, wodurch sich die angestrebte Drehmomentabstützung ergibt, weil angreifende Drehmomente an das Gegenstück und über das Gegenstück an das Gehäuse weitergeleitet und entsprechend aufgenommen werden können, sodass der stangenförmige Körper drehfest gehalten ist.

Eine erste Weiterbildung der erfindungsgemäßen Vorrichtung sieht vor, dass die Formschlussstruktur des Gegenstücks einstückig mit demselben ausgebildet ist. Auf diese Weise lässt sich die Anzahl der erforderlichen Bauteile reduzieren und eine einfach und kostengünstig zu fertigende Vorrichtung schaffen.

Im Zuge einer besonders bevorzugten Weiterbildung der erfindungsgemäßen Vorrichtung ist vorgesehen, dass die Formschlussstruktur des Gegenstücks die Form eines gegenüber der Stirnseite des Gegenstücks vorspringenden Dreiecksprismas aufweist. Das Dreiecksprisma kann eine abgeflachte Spitze aufweisen. Die komplementäre Formschlussstruktur des inneren Klemmelements kann die Form einer entsprechenden (dreieckförmigen) Ausnehmung aufweisen, oder umgekehrt. Dabei kann weiterhin vorgesehen sein, dass die genannte Ausnehmung radial zumindest nach innen und/oder nach außen öffnet. Wenn die Ausnehmung an dem inneren Klemmelement vorgesehen ist, besteht auf diese Weise die Möglichkeit, das innere Klemmelement während des Klemmvorgangs zum Halten des stangenförmigen Körpers in radialer Richtung zu verformen, ohne dass sich eine solche Verformung nachteilig auf die erreichbare Drehmomentabstützung auswirken würde und ohne dass sich die Drehmomentabstützung nachteilig auf die erforderliche Verformbarkeit des inneren Klemmelements auswirken würde.

Eine wieder andere Weiterbildung der erfindungsgemäßen Vorrichtung ist dadurch gekennzeichnet, dass ein Winkel zwischen den gegenüber der betreffenden Stirnseite vorspringenden Flächen des Dreiecksprismas zwischen etwa 60° und etwa 120°, vorzugsweise zwischen etwa 80° und 100°, höchst vorzugsweise etwa 90°, beträgt. Die Anmelderin hat herausgefunden, dass sich mit den genannten Winkelangaben bzw. den genannten Winkelbereichen besonders gut wirksame Drehmomentabstützungen erreichen lassen, ohne dass es zu einer übermäßigen Belastung der hierfür eingesetzten Elemente bzw. Werkstoffe käme.

Eine andere Weiterbildung der erfindungsgemäßen Vorrichtung sieht vor, dass die Formschlussstruktur des Gegenstücks eine kuppelartige Form oder eine Rundbogenform aufweist und dass die komplementäre Formschlussstruktur des inneren Klemmelements die Form einer entsprechenden Ausnehmung aufweist, oder umgekehrt. Auch mit derartigen Formgebungen lassen sich effektive Drehmomentabstützungen erreichen, wobei die im Bereich der Formschlussstrukturen wirkenden Kräfte günstig aufgenommen werden können.

Eine wieder andere Weiterbildung der erfindungsgemäßen Vorrichtung sieht vor, dass die Formschlussstruktur des Gegenstücks durch ein in das Gegenstück eingesetztes, gegenüber dessen Stirnseite vorspringendes weiteres Element gebildet ist. Bei diesem weiteren Element kann es sich um einen Quader, eine Kugel oder einen Stift handeln, ohne dass die Erfindung auf eine besondere Formgebung beschränkt wäre. Wenn das weitere Element als Stift ausgebildet ist, weist dieser vorzugsweise eine abgerundete Kuppe oder eine Spitze, beispielsweise eine Kegelspitze, auf. Entsprechend kann die komplementäre Formschlussstruktur des inneren Klemmelements die Form einer entsprechenden Ausnehmung aufweisen, oder umgekehrt. Wiederum kann vorgesehen sein, dass die genannte Ausnehmung in radialer Richtung zumindest nach innen und/oder nach außen ein Übermaß gegenüber dem weiteren Element aufweist.

Auf die Vorteile einer solchen Ausgestaltung wurde weiter oben bereits detailliert hingewiesen.

Wenn die Formschlussstruktur in der genannten Weise als vorspringendes weiteres, das heißt separates Element gebildet ist, besteht insbesondere die Möglichkeit, Beschädigungen durch Verschleiß durch eine besondere Werkstoffauswahl entgegenzuwirken bzw. verschlissene Formschlussstrukturen einfach auszutauschen. Außerdem besteht die Möglichkeit, die Formschlussstruktur in einfacher Weise an konkrete Verwendungserfordernisse anzupassen.

Die konkret angesprochenen exemplarischen Formgebungen des weiteren Elements können insbesondere im Hinblick auf eine inhärente Zentrierwirkung beim Eingreifen in die komplementäre Formschlussstruktur vorteilhaft sein. Gleiches gilt auch für die bereits angesprochenen Ausgestaltungen als Dreiecksprisma, Kuppel oder Rundbogen.

Weiterhin kann bei einer Weiterbildung der erfindungsgemäßen Vorrichtung vorgesehen sein, dass das Gegenstück eine Mehrzahl an Formschlussstrukturen und das innere Klemmelement eine entsprechende Mehrzahl an komplementären Formschlussstrukturen aufweist, die vorzugsweise gleichmäßig über den jeweiligen Umfang verteilt angeordnet sind. Auf diese Weise wird die Wirksamkeit der Drehmomentabstützung verbessert, und es kommt zu einer gleichmäßigen Verteilung der angreifenden Kräfte, was sich vorteilhaft auf die Lebensdauer auswirken kann. Die Erfindung ist jedoch keinesfalls darauf beschränkt, dass die angesprochenen Mehrzahlen einander entsprechen müssen, vielmehr können sich die Mehrzahlen betragsmäßig unterscheiden, solange es möglich ist, die Formschlussstrukturen und die komplementären Formschlussstrukturen in Eingriff zu bringen.

Im Zuge einer wieder anderen Weiterbildung der erfindungsgemäßen Vorrichtung kann außerdem vorgesehen sein, dass das innere Klemmelement einteilig in Form einer Buchse oder mehrteilig in Form von mehreren Segmenten ausgebildet ist, wobei es in der einteiligen Ausbildung wenigstens einen Schlitz aufweist, der im Wesentlichen in Längsrichtung des stangenförmigen Körpers verläuft, wobei pro Segment oder bezogen auf jeden Schlitz höchstens zwei komplementäre Formschlussstrukturen vorgesehen sind, und wobei vorzugsweise pro Segment oder bezogen auf jeden Schlitz nur eine komplementäre Formschlussstruktur vorgesehen ist. Da es beim eigentlichen Klemmvorgang zu einer Verformung des inneren Klemmelements kommen kann, worauf bereits hingewiesen wurde, wird die Funktion der gesamten Vorrichtung durch die beschriebene geschlitzte oder segmentierte Ausbildung des inneren Klemmelements stark verbessert. Damit es nicht zu einem ungewollten Verklemmen oder Verkanten des inneren Klemmelements bei dessen Verformung kommt, sehen die angesprochenen Weiterbildungen der Vorrichtung vor, die Anzahl der (komplementären) Formschlussstrukturen zu begrenzen. Dabei ist besonders bevorzugt, wenn pro Segment oder bezogen auf jeden Schlitz tatsächlich nur eine (komplementäre) Formschlussstruktur vorgesehen ist. Unter Umständen kann es jedoch auch möglich und sinnvoll sein, zwei (komplementäre) Formschlussstrukturen, bezogen auf jedes Segment oder jeden Schlitz, vorzusehen, wobei insbesondere bei der geschlitzten Ausgestaltung die beiden Formschlussstrukturen dann möglichst nahe (auf beiden Seiten) des Schlitzes angeordnet sein sollten, um die Wirksamkeit der Vorrichtung nicht zu beeinträchtigen.

In Bezug auf eine wieder andere Ausgestaltung der erfindungsgemäßen Vorrichtung kann auch vorgesehen sein, dass das Gegenstück an seinem dem inneren Klemmelement abgewandten Ende einen vorzugsweise umlaufenden Flansch aufweist, über den es mit dem Gehäuse drehfest verbunden ist, insbesondere durch entsprechende Bohrungen und Stifte oder dergleichen. Es hat sich gezeigt, dass eine solche Ausgestaltung des Gegenstücks besonders gut geeignet ist, die erforderliche drehfeste Anordnung des Gegenstücks bezüglich des Gehäuses zu realisieren.

Eine besonders bevorzugte Weiterbildung der erfindungsgemäßen Vorrichtung sieht vor, dass das Gegenstück als Hülsenteil ausgebildet ist, welches Hülsenteil den stangenförmigen Körper in einem Abschnitt umgibt. Bei einer solchen Ausgestaltung ist es grundsätzlich möglich, dass sich der stangenförmige Körper vollständig durch das Gehäuse hindurch erstreckt.

Schließlich sieht eine andere Weiterbildung der erfindungsgemäßen Vorrichtung noch vor, dass das innere Klemmelement im Bereich seiner Stirnseite wenigstens einen, vorzugsweise umfänglich umlaufenden axialen Vorsprung aufweist, mit dem es das Gegenstück in einem Abschnitt mit bei gelöstem stangenförmigem Körper radialen Spiel im Bereich von dessen Stirnseite radial übergreift. In diesem Abschnitt ist dann wenigstens eine Bohrung in dem inneren Klemmelement und in dem Gegenstück vorgesehen, wobei ein in radialer Richtung orientierter Stift mit seinem einen Ende in die Bohrung in dem inneren Klemmelement und seinem anderen Ende in die Bohrung in dem Gegenstück eingesetzt ist. Auf diese Weise wird über den genannten radialen Stift (indirekt) der Formschluss zwischen dem inneren Klemmelement und dem äußeren Klemmelement hergestellt, um die gewünschte Drehmomentabstützung zu bewirken. Besonders bevorzugt ist in diesem Zusammenhang, wenn das innere Klemmelement gleichmäßig über seinen Umfang verteilt eine Mehrzahl derartiger axialer Vorsprünge aufweist, die jeweils über einen radial orientierten Stift mit dem Gegenstück gekoppelt sind, um eine möglichst gleichmäßige Kraftableitung zu erreichen.

Eine Weiterbildung der erfindungsgemäßen Nachrüst-Baugruppe zeichnet sich dadurch aus, dass das innere Klemmelement und/oder das Gegenstück gemäß einer der vorstehend beschriebenen Weiterbildungen der erfindungsgemäßen Vorrichtung ausgebildet ist bzw. sind.

Bei Verwendung einer erfindungsgemäßen Nachrüst-Baugruppe oder einer Weiterbildung hiervon lassen sich auch bestehende, konventionelle Haltevorrichtungen nachträglich zur Drehmomentabstützung ertüchtigen.

Weitere Eigenschaften und Vorteile der Erfindung ergeben sich aus der nachfolgenden Beschreibung von Ausführungsbeispielen anhand der Zeichnung.
- Figur 1: zeigt eine konkrete Ausgestaltung der erfindungsgemäßen Vorrichtung im Längsschnitt;
- Figur 2: zeigt eine detaillierte Darstellung bestimmter Elemente aus Figur 1;
- Figur 3: zeigt eine erste alternative Ausgestaltung bestimmter Elemente aus Figur 1;
- Figur 4: zeigt eine zweite alternative Ausgestaltung bestimmter Elemente aus Figur 1;
- Figur 5: zeigt eine dritte alternative Ausgestaltung bestimmter Elemente aus Figur 1;
- Figur 6: zeigt eine vierte alternative Ausgestaltung bestimmter Elemente aus Figur 1;
- Figur 7: zeigte eine fünfte alternative Ausgestaltung bestimmter Elemente aus Figur 1;
- Figur 8: zeigt eine sechste alternative Ausgestaltung bestimmter Elemente aus Figur 1;
- Figur 9: zeigt eine siebte alternative Ausgestaltung bestimmter Elemente aus Figur 1;
- Figur 10: zeigt eine achte alternative Ausgestaltung bestimmter Elemente aus Figur 1;
- Figur 11: zeigt eine neunte alternative Ausgestaltung bestimmter Elemente aus Figur 1;
- Figur 12: zeigt eine zehnte alternative Ausgestaltung bestimmter Elemente aus Figur 1; und
- Figur 13: zeigt eine elfte alternative Ausgestaltung bestimmter Elemente aus Figur 1;

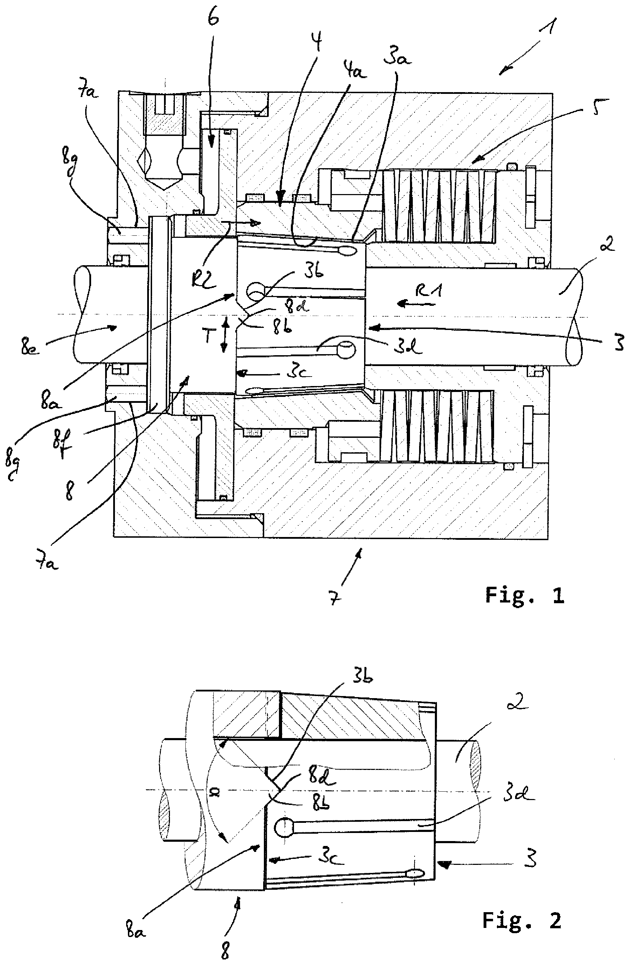

In Figur 1 ist eine erfindungsgemäße Vorrichtung 1 zum Halten eines stangenförmigen Körpers 2 dargestellt. Die Vorrichtung 1 umfasst bei Bezugszeichen 3 ein inneres Klemmelement, das aufgrund seiner speziellen Ausgestaltung auch als Klemmkäfig bezeichnet werden kann. Das innere Klemmelement 3 besitzt einen Außenkonus 3a und umgibt den stangenförmigen Körper 2 in einem Abschnitt. In einem nicht gehaltenen bzw. nicht geklemmten Zustand kann sich der stangenförmige Körper 2 durch das innere Klemmelement 3 hindurch bewegen. Außerdem umfasst die Vorrichtung 1 ein äußeres Klemmelement, welches bei Bezugszeichen 4 dargestellt ist. Dieses äußere Klemmelement weist einen Innenkonus 4a auf und umgibt das innere Klemmelement 3 zumindest abschnittweise. Dabei verhält es sich so, dass der Innenkonus 4a des äußeren Klemmelements 4 komplementär zu dem Außenkonus 3a des inneren Klemmelements 3 ausgebildet ist, wie dargestellt. Des Weiteren umfasst die Vorrichtung 1 eine Klemmkrafteinrichtung 5, die vorliegend in Form eines Federpakets ausgebildet ist. Die Klemmkrafteinrichtung dient zum relativen Verschieben von innerem Klemmelement 3 und äußerem Klemmelement 4 in einer ersten Richtung R1, wie dargestellt, welche ersten Richtung R1 sich parallel zur Längserstreckung des stangenförmigen Körpers 2 erstreckt. Auf diese Weise lässt sich das innere Klemmelement 3 im Bereich des Außenkonus 3a mit dem äußeren Klemmelement 4 im Bereich des Innenkonus 4a zum Halten des stangenförmigen Körpers in eine Anlagestellung bringen. Dabei wirkt eine (radiale) Kraft auf das innere Klemmelement 3, sodass sich eine reibschlüssige Verbindung mit dem stangenförmigen Körper 2 ergibt, um diesen in der gewünschten Weise zu halten. Darüber hinaus weist die Vorrichtung 1 noch eine Lösekrafteinrichtung auf, die mit dem Bezugszeichen 6 bezeichnet ist. Vorliegend ist die Lösekrafteinrichtung 6 als Hydraulikeinrichtung (oder Pneumatikeinrichtung) ausgebildet. Sie dient zum relativen Verschieben von innerem Klemmelement 3 und äußerem Klemmelement 4 in einer zweiten, der ersten Richtung R1 entgegengesetzten Richtung R2, wie dargestellt. Die zweite Richtung R2 verläuft parallel zur Längserstreckung des stangenförmigen Körpers 2, um auf diese Weise das innere Klemmelement 3 im Bereich des Außenkonus 3a und das äußere Klemmelement 4 im Bereich des Innenkonus 4a zum Lösen bzw. Freigeben des stangenförmigen Körpers 2 voneinander zu beabstanden.

Die bislang erwähnten Elemente der Vorrichtung 1 sind in ein (mehrteiliges) Gehäuse 7 aufgenommen, welches ebenfalls Teil der Vorrichtung 1 ist. Der stangenförmige Körper 2 ist gemäß Figur 1 durch das Gehäuse 7 hindurch geführt. In dem Gehäuse 7 ist benachbart zu dem inneren Klemmelement 3 ein Gegenstück 8 angeordnet, welches Gegenstück 8 in der ersten Richtung R1 hinter dem inneren Klemmelement 3 vorgesehen ist. Eine dem inneren Klemmelement 3 zugewandte Stirnseite des Gegenstücks 8 ist mit dem Bezugszeichen 8a bezeichnet. Das Gegenstück 8 ist bezüglich des Gehäuses 7 drehfest angeordnet. Zu diesem Zweck weist es endständig einen umlaufenden Flansch auf, der mit dem Bezugszeichen 8f bezeichnet ist. Im Bereich des Flansches 8f sind eine Anzahl von Bolzen oder Stiften 8g angeordnet, die sich parallel zur Längserstreckung des stangenförmigen Körpers 2 erstrecken und die in entsprechende Bohrungen 7a des Gehäuses 7 eingreifen, um die angesprochene drehfeste Verbindung von Gegenstück 8 und Gehäuse 7 zu realisieren. Der genannte Flansch 8f ist an einem dem inneren Klemmelement 3 abgewandten Ende 8e des Gegenstücks 8 angeordnet. Weiterhin weist das Gegenstück 8 am oder im Bereich der genannten Stirnseite 8a wenigstens eine Formschlussstruktur 8b auf, die vorliegend in Form eines Dreiecksprismas ausgebildet ist. Vorteilhafterweise besitzt das Gegenstück 8 mehrere solcher Formschlussstrukturen 8b, was aus der Darstellung in Figur 1 nicht erkennbar ist. Diese können gleichmäßig über den Umfang des Gegenstücks 8 verteilt angeordnet sein. Das innere Klemmelement 3 weist wenigstens eine zu der Formschlussstruktur 8b des Gegenstücks 8 zumindest teilweise komplementäre Formschlussstruktur 3b auf, die vorliegend entsprechend nach Art einer dreieckförmigen Ausnehmung ausgebildet ist, welche Ausnehmung radial nach innen und außen öffnet, um eine radiale Verformung des inneren Klemmelements 3 beim Klemmvorgang nicht zu behindern. Die Formschlussstruktur 3b ist vorliegend an einer dem Gegenstück 8 zugewandten Stirnseite 3b des inneren Klemmelements 3 angeordnet. Auf diese Weise können die Formschlussstruktur 8b des Gegenstücks 8 und die komplementäre Formschlussstruktur 3b des inneren Klemmelements 3 in der Anlagestellung miteinander unter Bildung eines Formschlusses in Eingriff stehen, welcher Formschluss im Wesentlichen nur in tangentialer Richtung T bezüglich der Stirnseiten 8a und 3c bzw. in Umfangsrichtung, quer zu einer radialen Richtung der Anordnung, wirksam ist, um die angestrebte Drehmomentabstützung zu erreichen, ohne eine Verformung speziell des inneren Klemmelements 3 zu behindern.

Das vorstehend beschriebene innere Klemmelement 3 und das entsprechende Gegenstück 8 lassen sich grundsätzlich auch bei bereits bestehenden Halte- oder Klemmvorrichtungen nachrüsten, sodass diese nachträglich zur Drehmomentabstützung ertüchtigt werden können, was gegenüber der Neuanschaffung einer gesamten Haltevorrichtung einen deutlichen Kostenvorteil bedeuten kann.

Gemäß der Darstellung in Figur 1 sind die Formschlussstruktur des Gegenstücks 8b des Gegenstücks 8 und das Gegenstück 8 selbst einstückig ausgebildet, ohne dass die Erfindung hierauf beschränkt wäre (siehe unten).

Wie sich der Darstellung in Figur 1 nicht ohne weiteres entnehmen lässt, weist das als Formschlussstruktur 8b des Gegenstücks 8 fungierende Dreiecksprisma eine abgeflachte Spitze 8d auf, damit es nicht aufgrund von Fertigungstoleranzen zu einem nur unvollständigen Zusammenwirken von Klemmelement 3 und Gegenstück 8 im Bereich der Stirnseiten 8a, 3c kommt.

Wie man der vergrößerten Darstellung in Figur 2 entnimmt, beträgt ein Winkel α zwischen den gegenüber der betreffenden Stirnseite 8a des Gegenstücks 8 vorspringenden Flächen des Dreiecksprismas bei dem gezeigten Ausführungsbeispiel etwa 90°. Der Winkel α ist jedoch nicht auf diesen genauen Wert beschränkt, sondern kann im Wertebereich zwischen etwa 60° und etwa 120°, vorzugsweise zwischen etwa 80° und 100°, liegen.

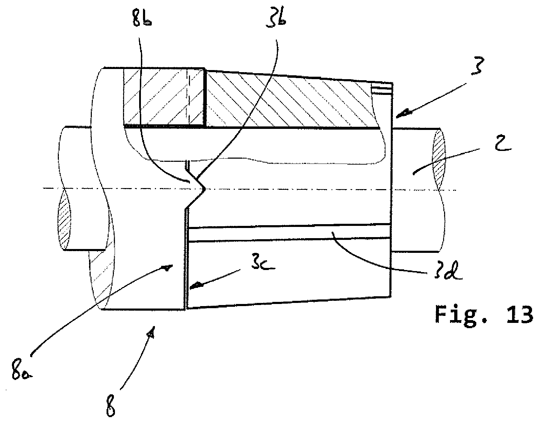

Wie man der Abbildung in Figur 1 und in Figur 2 noch entnimmt, weist das innere Klemmelement 3 eine Reihe von Schlitzen 3b auf, welche abwechselnd an dem einen oder dem anderen Ende des Klemmelements 3 beginnend ausgebildet sein können und jeweils in einer kreisförmigen Erweiterung enden. Die Schlitze 3d ermöglichen die bereits mehrfach angesprochene Verformbarkeit des inneren Klemmelements 3 während des Klemmvorgangs. Die endständigen kreisförmigen Erweiterungen sind aufgrund einer angestrebten Kräfteverteilung erforderlich bzw. sinnvoll, was der Fachmann ohne weiteres erkennt. Grundsätzlich liegt jedoch auch eine mehrteilige, segmentartige Ausgestaltung des inneren Klemmelements 3 im Rahmen der Erfindung, worauf weiter unten anhand von Figur 13 noch genauer eingegangen wird. Wie sich der Figur 1 noch entnehmen lässt, ist in einem Bereich zwischen zwei benachbarten Schlitzen 3d des inneren Klemmelements 3 genau eine komplementäre Formschlussstruktur bzw. Ausnehmung 3b angeordnet, damit die Verformung des inneren Klemmelements 3 beim eigentlichen Klemmvorgang nicht behindert wird, wozu auch das bereits angesprochene Öffnen der Ausnehmung 3b nach innen und nach außen in radialer Richtung beiträgt. Die Erfindung ist jedoch nicht auf eine derart öffnende Ausnehmung beschränkt, vielmehr kann es auch ausreichend sein, wenn die Ausnehmung 3b ein geeignetes Übermaß gegenüber der Formschlussstruktur 8b besitzt.

Ergänzend ist noch anzumerken, dass gemäß der Ausgestaltung in Figur 1 das Gegenstück 8 in Form eines Hülsenteils ausgebildet ist, welches Hülsenteil den stangenförmigen Körper 2 in einem Abschnitt umgibt bzw. durch welches der stangenförmige Körper 2 hindurch geführt ist.

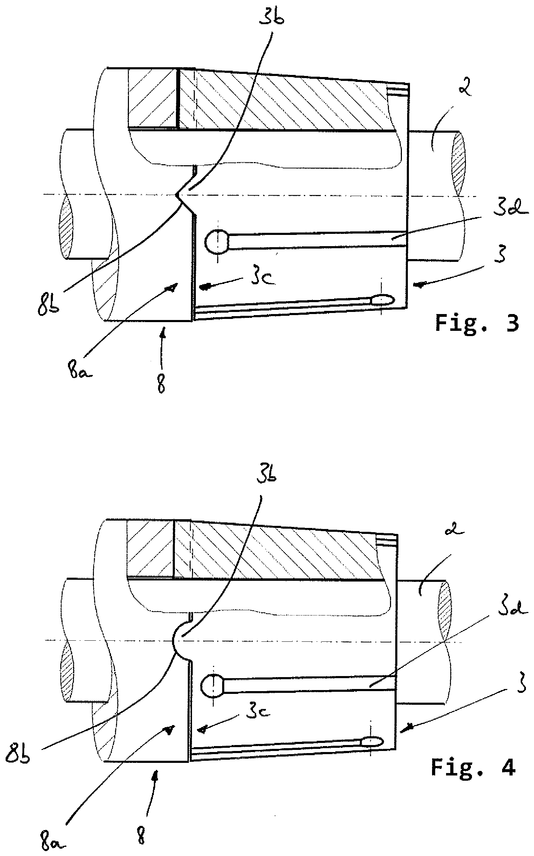

In den folgenden Abbildungen 3 bis 13 sind jeweils alternative Ausgestaltungen der erfindungsgemäßen Vorrichtung 1 dargestellt, wobei sich die Unterschiede zur Ausgestaltung gemäß Figur 1 und Figur 2 auf die Ausgestaltung der Formschlussstrukturen an dem inneren Klemmelement 3 und dem Gegenstück 8 beschränken, sodass vorliegend auch nur auf diese Unterschiede genauer eingegangen wird. Ansonsten entspricht die Ausgestaltung der erfindungsgemäßen Vorrichtung in allen Fällen im Wesentlichen derjenigen in Figur 1.

In Figur 3 ist eine Ausgestaltung gezeigt, bei der die Formschlussstruktur 8b des Gegenstücks 8 als (dreieckförmige) Ausnehmung und die komplementäre Formschlussstruktur 3b des inneren Klemmelements 3 als vorspringendes Dreiecksprisma ausgebildet ist. Dies entspricht gerade der umgekehrten Anordnung wie in Figur 1 oder Figur 2.

Gemäß Figur 4 ist die Formschlussstruktur 8b des Gegenstücks 8 als komplementär-kuppelförmige oder rundbogenförmige Ausnehmung und die andere Formschlussstruktur 3b des inneren Klemmelements 3 als passender kuppelförmiger oder rundbogenförmiger Vorsprung ausgebildet. Auch hier ist es selbstverständlich möglich, die Anordnung gerade umzukehren, sodass der Vorsprung an dem Gegenstück 8 und die Ausnehmung an dem inneren Klemmelement 3 vorgesehen ist.

Auch bei den Anordnungen gemäß Figur 3 und Figur 4 ist vorteilhafterweise vorgesehen, dass die jeweilige Ausnehmung 8b in radialer Richtung nach innen und außen öffnet.

Es ist - wie gesagt - nicht erforderlich, dass die vorspringende Formschlussstruktur des Gegenstücks 8 oder des inneren Klemmelements 3 einstückig mit diesem ausgebildet ist. Vielmehr kann die Formschlussstruktur auch durch ein eingesetztes, gegenüber der entsprechenden Stirnseite vorspringendes, weiteres Element gebildet sein. Beispiele hierfür finden sich in einigen der nachfolgenden Figuren:

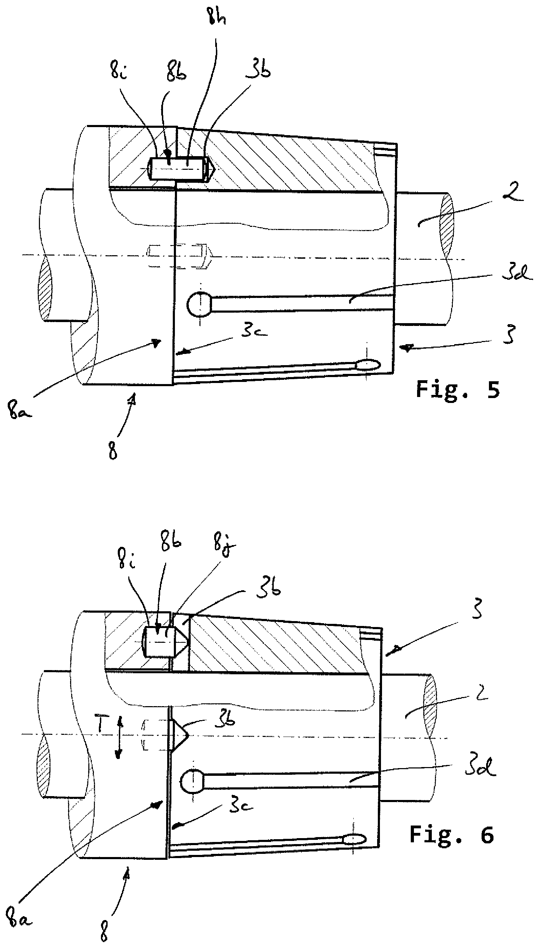

Gemäß Figur 5 weist das Gegenstück 8 im Bereich seiner Stirnseite 8a über den Umfang verteilt eine Anzahl von Stiften 8h auf, die in entsprechende Bohrungen 8i des Gegenstücks 8 eingesetzt sind. Entsprechend sind die komplementären Formschlussstrukturen 3b des inneren Klemmelements 3 in Form von Bohrungen ausgebildet, die ein gewisses (radiales) Übermaß bezüglich der Stifte 8h aufweisen, um die bereits mehrfach angesprochene Verformbarkeit des inneren Klemmelements 3 zu gewährleisten. Auch hier ist - wie bei den folgenden Beispielen - eine umgekehrte Ausgestaltung grundsätzlich in Betracht zu ziehen.

Gemäß Figur 6 sind die Formstrukturen 8b als Stifte 8j mit Kegelspitze ausgebildet und in geeignete Bohrungen 8i des Gegenstücks 8 eingesetzt, sodass sie - wie die Stifte 8h gemäß Figur 5 - gegenüber dessen Stirnseite 8a hervorragen. Die an dem inneren Klemmelement 3 vorgesehenen komplementären Formschlussstrukturen 3b sind als Ausnehmungen ausgebildet, die in radialer Richtung nach innen und außen öffnen, wie dargestellt. Die genannten Ausnehmungen 3b weisen im Querschnitt eine Dreiecksform auf, wie ebenfalls in Figur 6 gezeigt. Somit ergibt sich auch hier eine wirksame Kraftübertragung in tangentialer Richtung T, während die Verformbarkeit des inneren Klemmelements 3 in radialer Richtung nicht beeinträchtigt ist.

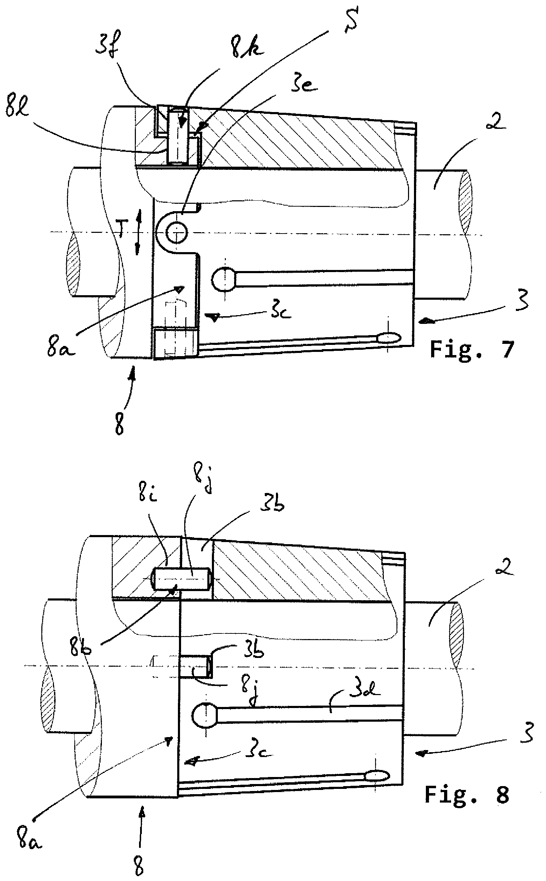

Figur 7 zeigt eine etwas abweichende Ausgestaltung, weil hier eine Verbindung zwischen dem Gegenstück 8 und dem inneren Klemmelement 3 mittels in radialer Richtung orientierter Stifte 8k bewerkstelligt ist. Speziell weist das innere Klemmelement 3 im Bereich seiner Stirnseite 3c mehrere, über den Umfang verteilt angeordnete axiale Vorsprünge 3e auf, mit denen es das Gegenstück 8 in einem Abschnitt mit bei gelöstem stangenförmigem Körper 2 radialen Spiel (vergleiche den Spalt bei Bezugszeichen S) im Bereich von dessen Stirnseite 8a radial übergreift. In dem genannten Abschnitt ist jeweils wenigstens eine Bohrung 8l bzw. 3f an dem Gegenstück 8 und dem inneren Klemmelement 3 vorgesehen, wobei die Bohrungen 8l und 3f in der gezeigten Weise fluchten. Der bereits angesprochene, in radialer Richtung orientierte Stift 8k ist mit seinem einen Ende in die Bohrung 3f in dem inneren Klemmelement 3 und mit seinem anderen Ende in die Bohrung 8l in dem Gegenstück 8 eingesetzt. Auf diese Weise ergibt sich eine in tangentialer Richtung T wirksame Verbindung, während aufgrund des angesprochenen Spiels S eine radiale Verformbarkeit des inneren Klemmelements 3 möglich bleibt.

Figur 8 entspricht weitestgehend der Ausgestaltung gemäß Figur 6, wobei allerdings der Stift 8j keine Kegelspitze und entsprechend die Ausnehmung 3b (Nut) einen rechteckförmigen Querschnitt aufweist.

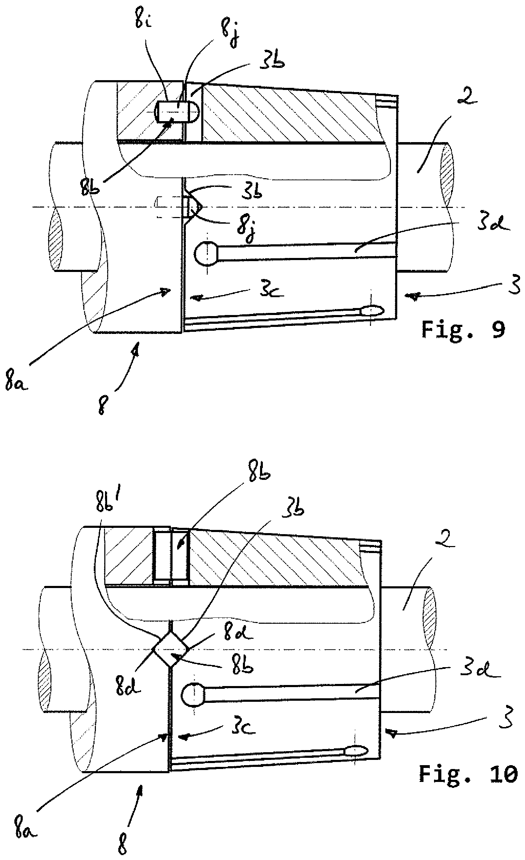

In Figur 9 ist eine weitere Abwandlung dieser Variante gezeigt, bei der der Stift 8j eine abgerundete Kuppe aufweist. Ausnehmung 3b ist analog zu Figur 6 dreieckförmig ausgebildet.

Gemäß der Ausgestaltung in Figur 10 ist das als Formschlussstruktur dienende, eingesetzte Element (aus Konsistenzgründen wiederum mit dem Bezugszeichen 8b bezeichnet) als Rechteckelement (Quader) mit vorzugsweise wenigstens zwei einander gegenüberliegenden, abgeflachten Kanten 8d ausgebildet, wie gezeigt. Sowohl in dem Gegenstück 8 als auch in dem inneren Klemmelement 3 sind entsprechende Ausnehmungen 8b', 3b vorgesehen, die das Rechteckelement 8b aufnehmen. Beide Ausnehmungen 8b', 3b öffnen in radialer Richtung nach innen und außen, um die erforderliche radiale Beweglichkeit zu gewährleisten.

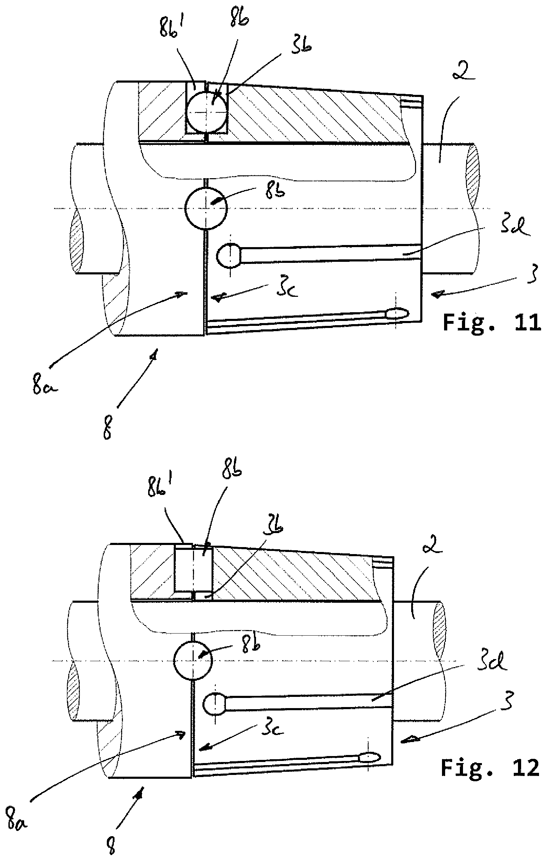

Die Figuren 11 und 12 zeigen Abwandlungen dieses Prinzips, wonach das eingesetzte Element 8b als Kugel (Figur 11) oder als Kreiszylinder (Figur 12) ausgebildet ist, was mit einer entsprechenden Ausformung der Ausnehmungen 8b' und 8b einhergeht.

Gemäß Figur 11 öffnen die Ausnehmungen 8b', 3b in radialer Richtung nur nach außen, was jedoch für die angestrebte radiale Verformbarkeit ausreichend ist.

Gemäß Figur 12 öffnet die Ausnehmung 3b in radialer Richtung nach innen und außen, während die Ausnehmung 8b' nur nach außen öffnet. Auch dies ist für den angestrebten Zweck ausreichend.

Schließlich zeigt Figur 13 eine Ausgestaltung, bei der die Schlitze 3d an dem inneren Klemmelement 3 als durchgehende Schlitze ausgebildet sind, sodass das innere Klemmelement 3 de facto in Form von mehreren (Klemm-)Segmenten vorliegt. Im Hinblick auf die Formschlussstrukturen 8b, 3b entspricht die Ausgestaltung ansonsten derjenigen in Figur 1 und Figur 2, sodass sich weitere Ausführungen diesbezüglich erübrigen.

## Patentansprüche

1. Vorrichtung (1) zum Halten eines stangenförmigen Körpers (2), aufweisend:
ein inneres Klemmelement (3) mit Außenkonus (3a), welches den stangenförmigen Körper (2) in einem Abschnitt umgibt;
ein äußeres Klemmelement (4) mit Innenkonus (4a), welches das innere Klemmelement (3) zumindest abschnittweise umgibt, dessen Innenkonus (4a) komplementär zu dem Außenkonus (3a) des inneren Klemmelements (3) ausgebildet ist;
eine Klemmkrafteinrichtung (5) zum relativen Verschieben von innerem Klemmelement (3) und äußerem Klemmelement (4) in einer ersten Richtung (R1) parallel zu einer Längserstreckung des stangenförmigen Körpers (2), um das innere Klemmelement (3) im Bereich des Außenkonus (3a) und das äußere Klemmelement (4) im Bereich des Innenkonus (4a) zum Halten des stangenförmigen Körpers (2) in eine Anlagestellung zu bringen;
eine Lösekrafteinrichtung (6) zum relativen Verschieben von innerem Klemmelement (3) und äußerem Klemmelement (4) in einer zweiten, der ersten entgegengesetzten Richtung (R2) parallel zu einer Längserstreckung des stangenförmigen Körpers (2), um das innere Klemmelement (3) im Bereich des Außenkonus (3a) und das äußere Klemmelement (4) im Bereich des Innenkonus (4a) zum Lösen des stangenförmigen Körpers (2) voneinander zu beabstanden;
ein Gehäuse (7), welches die vorbezeichneten Elemente (3-6) aufnimmt und in welches der stangenförmige Körper (2) hineingeführt oder durch welches der stangenförmige Körper (2) hindurchgeführt ist, in welchem Gehäuse (7) benachbart zu dem inneren Klemmelement (3) ein Gegenstück (8) angeordnet ist, welches Gegenstück (8) in der ersten Richtung (R1) hinter dem inneren Klemmelement (3) angeordnet ist und eine dem inneren Klemmelement (3) zugewandte Stirnseite (8a) aufweist;
das Gegenstück (8) bezüglich des Gehäuses (7) drehfest angeordnet ist und an oder im Bereich der Stirnseite (8a) wenigstens eine Formschlussstruktur (8b) aufweist;
wobei das innere Klemmelement (3) wenigstens eine zu der Formschlussstruktur (8b) des Gegenstücks (8) zumindest teilweise komplementäre Formschlussstruktur (3b) an oder im Bereich seiner dem Gegenstück (8) zugewandten Stirnseite (3c) aufweist, sodass die Formschlussstruktur (8b) des Gegenstücks (8) und die komplementäre Formschlussstruktur (3b) des inneren Klemmelements (3) in der Anlagestellung miteinander unter Bildung eines Formschlusses in Eingriff stehen, wobei der Formschluss im Wesentlichen nur in tangentialer Richtung (T) bezüglich der Stirnseiten (3c, 8a) oder in Umfangsrichtung, quer zu einer radialen Richtung, wirksam ist, nicht jedoch in radialer Richtung.

2. Vorrichtung (1) nach Anspruch 1,
**dadurch gekennzeichnet, dass**
die Formschlussstruktur (8b) des Gegenstücks (8) einstückig mit demselben ausgebildet ist.

3. Vorrichtung (1) nach Anspruch 1 oder 2,
**dadurch gekennzeichnet, dass**
die Formschlussstruktur (8b) des Gegenstücks (8) die Form eines gegenüber der Stirnseite (8a) des Gegenstücks (8) vorspringenden Dreiecksprismas, vorzugsweise mit abgeflachter Spitze (8d), und die komplementäre Formschlussstruktur (3b) des inneren Klemmelements (3) die Form einer entsprechenden Ausnehmung aufweist, oder umgekehrt, welche Ausnehmung vorzugsweise radial zumindest nach innen und/oder nach außen öffnet.

4. Vorrichtung (1) nach Anspruch 3,
**dadurch gekennzeichnet, dass**
ein Winkel (α) zwischen den gegenüber der betreffenden Stirnseite (8a) vorspringenden Flächen des Dreiecksprismas zwischen etwa 60° und etwa 120°, vorzugsweise zwischen etwa 80° und 100°, höchst vorzugsweise etwa 90°, beträgt.

5. Vorrichtung (1) nach Anspruch 1 oder 2,
**dadurch gekennzeichnet, dass**
die Formschlussstruktur (8b) des Gegenstücks (8) eine kuppelartige Form oder eine Rundbogenform und die komplementäre Formschlussstruktur (3b) des inneren Klemmelements (3) die Form einer entsprechenden Ausnehmung aufweist, oder umgekehrt.

6. Vorrichtung (1) nach Anspruch 1,
**dadurch gekennzeichnet, dass**
die Formschlussstruktur des Gegenstücks (8) durch ein in das Gegenstück (8) eingesetztes, gegenüber dessen Stirnseite (8a) vorspringendes weiteres Element (8b) gebildet ist, vorzugsweise Quader oder Kugel oder Stift, letzterer höchst vorzugsweise mit abgerundeter Kuppe oder mit einer Spitze, vorzugsweise Kegelspitze, und die komplementäre Formschlussstruktur des inneren Klemmelements (3) die Form einer entsprechenden Ausnehmung aufweist, oder umgekehrt, welche Ausnehmung in radialer Richtung zumindest nach innen und/oder nach außen ein Übermaß gegenüber dem weiteren Element (8b) aufweist.

7. Vorrichtung (1) nach einem der Ansprüche 1 bis 6,
**dadurch gekennzeichnet, dass**
das Gegenstück (8) eine Mehrzahl an Formschlussstrukturen (8b) und das innere Klemmelement (3) eine entsprechende Mehrzahl an komplementären Formschlussstrukturen (3b) aufweist, die vorzugsweise gleichmäßig über den jeweiligen Umfang verteilt angeordnet sind.

8. Vorrichtung (1) nach einem der Ansprüche 1 bis 7,
**dadurch gekennzeichnet, dass**
das innere Klemmelement (3) einteilig in Form einer Buchse oder mehrteilig in Form von Segmenten ausgebildet ist, wobei es in der einteiligen Ausbildung wenigstens einen Schlitz (3d) aufweist, der im Wesentlichen in Längsrichtung des stangenförmigen Körpers (2) verläuft, wobei pro Segment oder bezogen auf jeden Schlitz (3d) höchstens zwei komplementäre Formschlussstrukturen (3b) vorgesehen sind, und wobei vorzugsweise pro Segment oder bezogen auf jeden Schlitz (3d) nur eine komplementäre Formschlussstruktur (3b) vorgesehen ist.

9. Vorrichtung (1) nach einem der Ansprüche 1 bis 8,
**dadurch gekennzeichnet, dass**
das Gegenstück (8) an seinem dem inneren Klemmelement (3) abgewandten Ende (8e) einen vorzugsweise umlaufenden Flansch (8f) aufweist, über den es mit dem Gehäuse (7) drehfest verbunden ist, insbesondere über entsprechende Bohrungen (7a) und Stifte (8g) oder dgl.

10. Vorrichtung (1) nach einem der Ansprüche 1 bis 9,
**dadurch gekennzeichnet, dass**
das Gegenstück (8) als Hülsenteil ausgebildet ist, welches Hülsenteil den stangenförmigen Körpers (2) in einem Abschnitt umgibt.

11. Vorrichtung (1) nach einem der Ansprüche 1 bis 10,
**dadurch gekennzeichnet, dass**
das innere Klemmelement (3) im Bereich seiner Stirnseite (3c) wenigstens einen, vorzugsweise umfänglich umlaufenden axialen Vorsprung (3e) aufweist, mit dem es das Gegenstück (8) in einem Abschnitt mit bei gelöstem stangenförmigem Körper (2) radialem Spiel im Bereich von dessen Stirnseite (8a) radial übergreift, in welchem Abschnitt jeweils wenigstens eine Bohrung (3f, 8e) in dem inneren Klemmelement (3) und in dem Gegenstück (8) vorgesehen ist, wobei ein in radialer Richtung orientierter Stift (8k) mit seinem einen Ende in die Bohrung (3f) in dem inneren Klemmelement (3) und mit seinem anderen Ende in die Bohrung (8l) in dem Gegenstück (8) eingesetzt ist.

12. Nachrüst-Baugruppe für eine Vorrichtung (1') zum Halten eines stangenförmigen Körpers, welche Vorrichtung (1') aufweist:
ein inneres Klemmelement (3) mit Außenkonus (3a), welches dazu ausgebildet und vorgesehen ist, den stangenförmigen Körper (2) in einem Abschnitt zu umgeben;
ein äußeres Klemmelement (4) mit Innenkonus (4a), welches das innere Klemmelement (3) zumindest abschnittweise umgibt, dessen Innenkonus (4a) komplementär zu dem Außenkonus (3a) des inneren Klemmelements (3) ausgebildet ist;
eine Klemmkrafteinrichtung (5) zum relativen Verschieben von innerem Klemmelement (3) und äußerem Klemmelement (4) in einer ersten Richtung (R1) parallel zu einer Längsrichtung des stangenförmigen Körpers (2), um das innere Klemmelement (3) im Bereich des Außenkonus (3a) und das äußere Klemmelement (4) im Bereich des Innenkonus (4a) zum Halten des stangenförmigen Körpers (2) in eine Anlagestellung zu bringen;
eine Lösekrafteinrichtung zum relativen Verschieben von innerem Klemmelement (3) und äußerem Klemmelement (4) in einer zweiten, der ersten entgegengesetzten Richtung (R2) parallel zu einer Längsrichtung des stangenförmigen Körpers (2), um das innere Klemmelement (3) im Bereich des Außenkonus (3a) und das äußere Klemmelement (4) im Bereich des Innenkonus (4a) zum Lösen des stangenförmigen Körpers (2) voneinander zu beabstanden;
ein Gehäuse, welches die vorbezeichneten Elemente (3-6) aufnimmt und in welches der stangenförmige Körper (2) hineingeführt oder durch welches der stangenförmige Körper (2) hindurchgeführt ist;
welche Nachrüst-Baugruppe ferner aufweist:
ein in dem Gehäuse an dem stangenförmigen Körper (2) anzuordnendes Gegenstück (8), welches dazu ausgebildet und vorgesehen ist, in der ersten Richtung (R1) hinter dem inneren Klemmelement (3) angeordnet zu sein und welches eine dem inneren Klemmelement (3) zuzuwendende Stirnseite aufweist, welches Gegenstück (8) bezüglich des Gehäuses (7) drehfest anzuordnen ist und an oder im Bereich der Stirnseite (8a) wenigstens eine Formschlussstruktur aufweist;
ein inneres Nachrüst-Klemmelement, das anstelle des inneren Klemmelements (3) in die Vorrichtung (1') einsetzbar ist und wenigstens eine zu der Formschlussstruktur des Gegenstücks (8) zumindest teilweise komplementäre Formschlussstruktur an oder im Bereich seiner dem Gegenstück (8) zugewandten Stirnseite (8a) aufweist, sodass die Formschlussstruktur des Gegenstücks (8) und die komplementäre Formschlussstruktur des inneren Nachrüst-Klemmelements in der Anlagestellung miteinander unter Bildung eines Formschlusses in Eingriff bringbar ist, wobei der Formschluss im Wesentlichen nur in tangentialer Richtung (T) bezüglich der Stirnseiten (3c, 8a) oder in Umfangsrichtung, quer zu einer radialen Richtung, wirksam ist, nicht jedoch in radialer Richtung.

13. Nachrüst-Baugruppe nach Anspruch 12, mit den weiteren Merkmalen betreffend das innere Klemmelement (3) und/oder das Gegenstück (8) nach einem der Ansprüche 2 bis 11.

## Claims

1. Device (1) for holding a rod-shaped body (2), having:
an inner clamping element (3) having an external cone (3a) which surrounds the rod-shaped body (2) in one section;
an outer clamping element (4) having an internal cone (4a) which surrounds the inner clamping element (3) at least in some sections, the internal cone (4a) of which outer clamping element is formed so as to be complementary to the external cone (3a) of the inner clamping element (3);
a clamping force device (5) for relative displacement of the inner clamping element (3) and the outer clamping element (4) in a first direction (R1) parallel to a longitudinal extent of the rod-shaped body (2) in order to bring the inner clamping element (3) in the region of the external cone (3a) and the outer clamping element (4) in the region of the internal cone (4a) into a contact position to hold the rod-shaped body (2);
a releasing force device (6) for relative displacement of the inner clamping element (3) and the outer clamping element (4) in a second direction (R2), opposite to the first direction, parallel to a longitudinal extent of the rod-shaped body (2) in order to space the inner clamping element (3) in the region of the external cone (3a) and the outer clamping element (4) in the region of the internal cone (4a) apart from one another to release the rod-shaped body (2);
a housing (7) which accommodates the afore-mentioned elements (3-6) and into which the rod-shaped body (2) has been inserted or through which the rod-shaped body (2) is guided, in which housing (7) a counter-element (8) is arranged adjacent to the inner clamping element (3), which counter-element (8) is arranged after the inner clamping element (3) in the first direction (R1) and has an end face (8a) that faces towards the inner clamping element (3);
the counter-element (8) is arranged so as to be fixed against rotation relative to the housing (7) and has at least one interlocking structure (8b) on or in the region of the end face (8a);
wherein the inner clamping element (3) has on or in the region of its end face (3c) that faces towards the counter-element (8) at least one interlocking structure (3b) which is at least to some extent complementary to the interlocking structure (8b) of the counter-element (8) so that in the contact position the interlocking structure (8b) of the counter-element (8) and the complementary interlocking structure (3b) of the inner clamping element (3) are in engagement with one another to form an interlocking connection, the interlocking connection being effective substantially only in the tangential direction (T) in relation to the end faces (3c, 8a) or in the circumferential direction, transversely with respect to a radial direction, but not in a radial direction.

2. Device (1) according to claim 1,
**characterised in that**
the interlocking structure (8b) of the counter-element (8) is formed integrally with the latter.

3. Device (1) according to claim 1 or 2,
**characterised in that**
the interlocking structure (8b) of the counter-element (8) has the shape of a triangular prism, preferably having a flattened tip (8d), that projects with respect to the end face (8a) of the counter-element (8), and the complementary interlocking structure (3b) of the inner clamping element (3) has the shape of a corresponding recess, or *vice versa*, which recess preferably opens radially at least towards the inside and/or towards the outside.

4. Device (1) according to claim 3,
**characterised in that**
an angle (α) between the faces of the triangular prism that project with respect to the relevant end face (8a) is between approximately 60° and approximately 120°, preferably approximately between 80° and 100°, most preferably approximately 90°.

5. Device (1) according to claim 1 or 2,
**characterised in that**
the interlocking structure (8b) of the counter-element (8) has a dome-like shape or a round arch shape and the complementary interlocking structure (3b) of the inner clamping element (3) has the shape of a corresponding recess, or *vice versa.*

6. Device (1) according to claim 1,
**characterised in that**
the interlocking structure of the counter-element (8) is formed by a further element (8b) which is inserted into the counter-element (8) and projects with respect to the end face (8a) thereof, preferably a parallelepiped or sphere or pin, the latter most preferably having a rounded end or having a tip, preferably a conical tip, and the complementary interlocking structure of the inner clamping element (3) has the shape of a corresponding recess, or *vice versa,* which recess is oversized relative to the further element (8b) in the radial direction at least towards the inside and/or towards the outside.

7. Device (1) according to any one of claims 1 to 6,
**characterised in that**
the counter-element (8) has a plurality of interlocking structures (8b) and the inner clamping element (3) has a corresponding plurality of complementary interlocking structures (3b), which are preferably uniformly distributed around the respective circumference.

8. Device (1) according to any one of claims 1 to 7,
**characterised in that**
the inner clamping element (3) is of one-part construction in the form of a bushing or of multi-part construction in the form of segments, the one-part construction having at least one slot (3d) which runs substantially in the longitudinal direction of the rod-shaped body (2), a maximum of two complementary interlocking structures (3b) being provided per segment or in relation to each slot (3d), and preferably only one complementary interlocking structure (3b) being provided per segment or in relation to each slot (3d).

9. Device (1) according to any one of claims 1 to 8,
**characterised in that**
the counter-element (8) has, at its end (8e) facing away from the inner clamping element (3), a preferably circumferential flange (8f) by means of which it is joined to the housing (7) so as to be fixed against relative rotation, especially by means of corresponding bores (7a) and pins (8g) or the like.

10. Device (1) according to any one of claims 1 to 9,
**characterised in that**
the counter-element (8) is in the form of a sleeve part, which sleeve part surrounds the rod-shaped body (2) in one section.

11. Device (1) according to any one of claims 1 to 10,
**characterised in that**
the inner clamping element (3) has in the region of its end face (3c) at least one axial projection (3e) which preferably runs around the circumference and with which it in one section engages radially over the counter-element (8) in the region of its end face (8a) with radial play when the rod-shaped body (2) is in the released state, in which section at least one bore (3f, 8e) is provided in the inner clamping element (3) and in the counter-element (8), a pin (8k) that is oriented in the radial direction being inserted by its one end in the bore (3f) in the inner clamping element (3) and by its other end in the bore (81) in the counter-element (8).

12. Retrofit-assembly for a device (1') for holding a rod-shaped body, which device (1') has:
an inner clamping element (3) having an external cone (3a) which is configured and provided to surround the rod-shaped body (2) in one section;
an outer clamping element (4) having an internal cone (4a) which surrounds the inner clamping element (3) at least in some sections, the internal cone (4a) of which outer clamping element is formed so as to be complementary to the external cone (3a) of the inner clamping element (3);
a clamping force device (5) for relative displacement of the inner clamping element (3) and the outer clamping element (4) in a first direction (R1) parallel to a longitudinal direction of the rod-shaped body (2) in order to bring the inner clamping element (3) in the region of the external cone (3a) and the outer clamping element (4) in the region of the internal cone (4a) into a contact position to hold the rod-shaped body (2);
a releasing force device for relative displacement of the inner clamping element (3) and the outer clamping element (4) in a second direction (R2), opposite to the first direction, parallel to a longitudinal direction of the rod-shaped body (2) in order to space the inner clamping element (3) in the region of the external cone (3a) and the outer clamping element (4) in the region of the internal cone (4a) apart from one another to release the rod-shaped body (2);
a housing which accommodates the afore-mentioned elements (3-6) and into which the rod-shaped body (2) has been inserted or through which the rod-shaped body (2) is guided;
which retrofit-assembly also has:
a counter-element (8) to be arranged on the rod-shaped body (2) in the housing (8), which counter-element is configured and provided to be arranged after the inner clamping element (3) in the first direction (R1) and which has an end face that is to face towards the inner clamping element (3), which counter-element (8) is to be arranged so as to be fixed against rotation relative to the housing (7) and has at least one interlocking structure on or in the region of the end face (8a);
an inner retrofit-clamping element which is insertable into the device (1') instead of the inner clamping element (3) and has on or in the region of its end face (8a) that faces towards the counter-element (8) at least one interlocking structure which is at least to some extent complementary to the interlocking structure of the counter-element (8) so that in the contact position the interlocking structure of the counter-element (8) and the complementary interlocking structure of the inner retrofit-clamping element can be brought into engagement with one another to form an interlocking connection, the interlocking connection being effective substantially only in the tangential direction (T) in relation to the end faces (3c, 8a) or in the circumferential direction, transversely with respect to a radial direction, but not in a radial direction.

13. Retrofit-assembly according to claim 12, having the further features relating to the inner clamping element (3) and/or the counter-element (8) according to any one of claims 2 to 11.

## Revendications

1. Dispositif (1) dédié à la retenue d'un corps (2) en forme de tige, comprenant :
un élément intérieur de coincement (3), pourvu d'un cône extérieur (3a) et ceinturant, dans une région, ledit corps (2) en forme de tige ;
un élément extérieur de coincement (4) qui est muni d'un cône intérieur (4a), ceinture ledit élément intérieur de coincement (3), au moins par zones, et dont le cône intérieur (4a) est d'une réalisation concordant avec celle du cône extérieur (3a) dudit élément intérieur de coincement (3) ;
un système (5) d'application d'une force de coincement, affecté au déplacement relatif de l'élément intérieur de coincement (3) et de l'élément extérieur de coincement (4) dans une première direction (R1) parallèle à une étendue longitudinale du corps (2) en forme de tige, afin d'amener ledit élément intérieur de coincement (3) et ledit élément extérieur de coincement (4) à une position de contact, respectivement dans la région du cône extérieur (3a) et dans la région du cône intérieur (4a), de manière à retenir ledit corps (2) en forme de tige ;
un système (6) d'application d'une force de libération, affecté au déplacement relatif dudit élément intérieur de coincement (3) et dudit élément extérieur de coincement (4) dans une seconde direction (R2) opposée à ladite première direction et parallèle à une étendue longitudinale du corps (2) en forme de tige, afin d'espacer l'un de l'autre ledit élément intérieur de coincement (3) et ledit élément extérieur de coincement (4), respectivement dans la région du cône extérieur (3a) et dans la région du cône intérieur (4a), de manière à libérer ledit corps (2) en forme de tige ;
un boîtier (7) qui reçoit les éléments précités (3-6) et dans lequel le corps (2) en forme de tige est introduit, ou à travers lequel ledit corps (2) en forme de tige est guidé, boîtier (7) dans lequel une pièce complémentaire (8) est logée au voisinage de l'élément intérieur de coincement (3), laquelle pièce complémentaire (8) est située derrière ledit élément intérieur de coincement (3), dans la première direction (R1), et est dotée d'une face extrême (8a) tournée vers ledit élément intérieur de coincement (3) ;
ladite pièce complémentaire (8) étant agencée avec verrouillage rotatif par rapport audit boîtier (7), et comportant au moins une structure (8b) d'engagement positif au niveau de la région de ladite face extrême (8a), ou dans ladite région ;
sachant que l'élément intérieur de coincement (3) présente, au niveau de la région de sa face extrême (3c) tournée vers la pièce complémentaire (8), ou dans ladite région, au moins une structure (3b) d'engagement positif qui concorde, au moins en partie, avec la structure (8b) d'engagement positif de ladite pièce complémentaire (8), de façon telle que ladite structure (8b) d'engagement positif de la pièce complémentaire (8), et ladite structure concordante (3b) d'engagement positif dudit élément intérieur de coincement (3), soient en prise l'une avec l'autre dans la position de contact en instaurant un ajustement par complémentarité de formes, lequel ajustement par complémentarité de formes n'est opérant, pour l'essentiel, que dans une direction tangentielle (T) par rapport aux faces extrêmes (3c, 8a) ou dans la direction périphérique, transversalement par rapport à une direction radiale, mais toutefois pas dans une direction radiale.

2. Dispositif (1) selon la revendication 1,
**caractérisé par le fait que**
la structure (8b) d'engagement positif de la pièce complémentaire (8) est ménagée d'une seul tenant avec cette dernière.

3. Dispositif (1) selon la revendication 1 ou 2,
**caractérisé par le fait que**
la structure (8b) d'engagement positif de la pièce complémentaire (8) revêt la forme d'un prisme triangulaire faisant saillie par rapport à la face extrême (8a) de ladite pièce complémentaire (8) et muni, de préférence, d'une pointe aplatie (8d), et la structure concordante (3b) d'engagement positif de l'élément intérieur de coincement (3) revêt la forme d'un évidement correspondant, ou inversement, lequel évidement s'ouvre, de préférence, au moins vers l'intérieur et/ou vers l'extérieur dans le sens radial.

4. Dispositif (1) selon la revendication 3,
**caractérisé par le fait**
**qu'**un angle (a), entre les surfaces du prisme triangulaire qui font saillie par rapport à la face extrême (8a) considérée, mesure entre environ 60° et environ 120°, de préférence entre environ 80° et environ 100°, et environ 90° avec préférence maximale.

5. Dispositif (1) selon la revendication 1 ou 2,
**caractérisé par le fait que**
la structure (8b) d'engagement positif de la pièce complémentaire (8) présente une forme du type coupole ou la forme d'un arc arrondi, et la structure concordante (3b) d'engagement positif de l'élément intérieur de coincement (3) revêt la forme d'un évidement correspondant, ou inversement.

6. Dispositif (1) selon la revendication 1,
**caractérisé par le fait que**
la structure d'engagement positif de la pièce complémentaire (8) est constituée d'un élément supplémentaire (8b) introduit dans la pièce complémentaire (8) et faisant saillie par rapport à la face extrême (8a) de celle-ci, de préférence un parallélépipède ou une sphère, voire une broche, cette dernière étant munie, avec préférence maximale, d'une calotte arrondie ou d'une pointe, de préférence une pointe conique, et la structure concordante d'engagement positif de l'élément intérieur de coincement (3) revêt la forme d'un évidement correspondant, ou inversement, lequel évidement présente, par rapport audit élément supplémentaire (8b), un surdimensionnement au moins vers l'intérieur et/ou vers l'extérieur dans le sens radial.

7. Dispositif (1) selon l'une des revendications 1 à 6,
**caractérisé par le fait que**
la pièce complémentaire (8) comprend une pluralité de structures (8b) d'engagement positif, et l'élément intérieur de coincement (3) comprend une pluralité correspondante de structures concordantes (3b) d'engagement positif, qui sont de préférence agencées avec répartition uniforme sur le pourtour respectif.

8. Dispositif (1) selon l'une des revendications 1 à 7,
**caractérisé par le fait que**
l'élément intérieur de coincement (3) est réalisé d'un seul tenant, sous la forme d'une douille, ou en plusieurs parties revêtant la forme de segments, sachant qu'il est muni, dans la réalisation monobloc, d'au moins une fente (3d) s'étendant pour l'essentiel dans la direction longitudinale du corps (2) en forme de tige, sachant qu'au maximum deux structures concordantes (3b) d'engagement positif sont prévues pour chaque segment ou par rapport à chaque fente (3d) et sachant que, de préférence, une unique structure concordante (3b) d'engagement positif est prévue pour chaque segment ou par rapport à chaque fente (3d).

9. Dispositif (1) selon l'une des revendications 1 à 8,
**caractérisé par le fait que**
la pièce complémentaire (8) comporte, à son extrémité (8e) pointant à l'opposé de l'élément intérieur de coincement (3), une bride (8f) préférentiellement circonférentielle au moyen de laquelle elle est reliée au boîtier (7) avec verrouillage rotatif, notamment par l'intermédiaire de perçages (7a) et de broches (8g) correspondant(e)s, ou de moyens similaires.

10. Dispositif (1) selon l'une des revendications 1 à 9,
**caractérisé par le fait que**
la pièce complémentaire (8) est réalisée en tant que partie formant manchon, laquelle partie formant manchon ceinture, dans une région, le corps (2) en forme de tige.

11. Dispositif (1) selon l'une des revendications 1 à 10, **caractérisé par le fait que**
l'élément intérieur de coincement (3) est muni, dans la région de sa face extrême (3c), d'au moins une saillie axiale (3e) de préférence circonférentiellement périphérique, par laquelle il vient coiffer radialement la pièce complémentaire (8) dans une zone, avec jeu radial à l'état libéré du corps (2) en forme de tige, dans la région de la face extrême (8a) de ladite pièce, zone dans laquelle au moins un perçage (3f, 81) est prévu, à chaque fois, dans l'élément intérieur de coincement (3) et dans la pièce complémentaire (8), sachant qu'une broche (8k), orientée dans le sens radial, est insérée par l'une de ses extrémités dans le perçage (3f) pratiqué dans ledit élément intérieur de coincement (3) et, par son autre extrémité, dans le perçage (81) pratiqué dans ladite pièce complémentaire (8).

12. Ensemble de remaniement structurel dévolu à un dispositif (1') dédié à la retenue d'un corps en forme de tige, lequel dispositif (1') comprend :
un élément intérieur de coincement (3), pourvu d'un cône extérieur (3a) réalisé et prévu pour ceinturer, dans une région, ledit corps (2) en forme de tige ;
un élément extérieur de coincement (4) qui est muni d'un cône intérieur (4a), ceinture ledit élément intérieur de coincement (3), au moins par zones, et dont le cône intérieur (4a) est d'une réalisation concordant avec celle du cône extérieur (3a) dudit élément intérieur de coincement (3) ;
un système (5) d'application d'une force de coincement, affecté au déplacement relatif de l'élément intérieur de coincement (3) et de l'élément extérieur de coincement (4) dans une première direction (R1) parallèle à une étendue longitudinale du corps (2) en forme de tige, afin d'amener ledit élément intérieur de coincement (3) et ledit élément extérieur de coincement (4) à une position de contact, respectivement dans la région du cône extérieur (3a) et dans la région du cône intérieur (4a), de manière à retenir ledit corps (2) en forme de tige ;
un système d'application d'une force de libération, affecté au déplacement relatif dudit élément intérieur de coincement (3) et dudit élément extérieur de coincement (4) dans une seconde direction (R2) opposée à ladite première direction et parallèle à une étendue longitudinale du corps (2) en forme de tige, afin d'espacer l'un de l'autre ledit élément intérieur de coincement (3) et ledit élément extérieur de coincement (4), respectivement dans la région du cône extérieur (3a) et dans la région du cône intérieur (4a), de manière à libérer ledit corps (2) en forme de tige ;
un boîtier qui reçoit les éléments précités (3-6) et dans lequel le corps (2) en forme de tige est introduit, ou à travers lequel ledit corps (2) en forme de tige est guidé ;
lequel ensemble de réaménagement structurel comprend, par ailleurs :
une pièce complémentaire (8) qui est destinée à être placée sur le corps (2) en forme de tige, dans le boîtier, est réalisée et prévue pour être disposée derrière l'élément intérieur de coincement (3), dans la première direction (R1), et est dotée d'une face extrême conçue pour être tournée vers ledit élément intérieur de coincement (3), ladite pièce complémentaire (8) étant conçue pour être agencée avec verrouillage rotatif par rapport audit boîtier (7), et comportant au moins une structure d'engagement positif au niveau de la région de ladite face extrême (8a), ou dans ladite région ;
un élément intérieur de coincement affecté au remaniement structurel, qui peut être inséré dans le dispositif (1') à la place de l'élément intérieur de coincement (3) et présente, au niveau de la région de sa face extrême (3c) tournée vers la pièce complémentaire (8), ou dans ladite région, au moins une structure d'engagement positif qui concorde, au moins en partie, avec la structure d'engagement positif de ladite pièce complémentaire (8), de façon telle que ladite structure d'engagement positif de la pièce complémentaire (8), et ladite structure concordante d'engagement positif dudit élément intérieur de coincement affecté au remaniement structurel, puissent être mises en prise l'une avec l'autre dans la position de contact en instaurant un ajustement par complémentarité de formes, lequel ajustement par complémentarité de formes n'est opérant, pour l'essentiel, que dans une direction tangentielle (T) par rapport aux faces extrêmes (3c, 8a) ou dans la direction périphérique, transversalement par rapport à une direction radiale, mais toutefois pas dans une direction radiale.

13. Ensemble de remaniement structurel selon la revendication 12, doté des caractéristiques supplémentaires relatives à l'élément intérieur de coincement (3) et/ou à la pièce complémentaire (8) conforme(s) à l'une des revendications 2 à 11.
